# EUROPEAN PATENT APPLICATION

(11) **EP 2 436 938 A1**
(43) Date of publication of application: **04.04.2012**
(21) Application number: 09845243.6
(22) Date of filing: 29.05.2009
(51) Int. Cl.: F16C 11/06

(54) **BALL JOINT**

(71) Applicant: Toyota Jidosha Kabushiki Kaisha, Toyota-shi, Aichi 471-8571 (JP)
(72) Inventor: KURASAKO, Ryoichi, Toyota-shi Aichi 471-8571 (JP); FUKUI, Yasushi, Toyota-shi Aichi 471-8571 (JP)
(74) Representative: Winter, Brandl, Fürniss, Hübner, Röss, Kaiser, Polte - Partnerschaft
(86) International application number: PCT/JP2009/060304
(87) International publication number: WO 2010/137181

(57) **Abstract**

A ball joint provided with a ball stud having a ball section at one end thereof, a socket for housing the ball section, and an elastically deformable anti-friction seat mounted between the ball section and the socket and rotatably supporting the ball section, wherein the socket and the anti-friction seat have an opening through which the stud section of the ball stud can be inserted in a loose fit condition. Bases and grooves are arranged in the inner surface of the anti-friction seat so as to extend in a direction across the peripheral edge of the opening and be alternately arranged in the circumferential direction extending along the peripheral edge of the opening. Each of the grooves is isolated from the opening by a partition wall extending between bases on opposite sides of the groove. The bases are in spherical contact with the ball section, and the grooves are filled with a lubricating agent.

## Description

### TECHNICAL FIELD

The present invention relates to a ball joint and, more particularly, to a ball joint having an elastically deformable anti-friction seat mounted between the ball section of a ball stud and a socket.

### BACKGROUND ART

Various types of ball joints have been known in the art and are utilized as couplings which couple two members so that they can pivot to each other. In general, a ball joint has a ball stud having a ball section at one end thereof, a socket for rotatably housing the ball section, and an anti-friction seat mounted between the ball section and the socket.

For example, Japanese Patent Laid-Open Publication No. 2000-145755 discloses a ball joint which has, in the inner surface of the anti-friction seat, a plurality of grease sumps extending in the circumferential direction and spaced apart from each other in the direction perpendicular to the circumferential direction and a plurality of grease grooves extending in the direction perpendicular to the circumferential direction and spaced apart from each other in the circumferential direction.

In such conventional ball joints as disclosed in the publication, each of the grease sumps is formed by two conical surfaces having different apex angles and the ball section of the ball stud is in line contact with the conical surfaces along circles. Accordingly, when a load is subjected which moves the ball section relative to the socket, the surface pressure of the anti-friction seat at areas where it is in contact with the ball section is locally increased, resulting in that the grease is hard to enter between the ball section and the anti-friction seat at the areas. Thus, the anti-friction seat deteriorates earlier and rotational friction torque of the ball section is easy to increase.

The socket and the anti-friction seat have openings through which the stud section of the ball stud is inserted in a loose fit condition. When a load is subjected which tends to move the ball section relative to the socket toward the openings, excessive deformation such as flow or creep may be generated at the end of the anti-friction seat on the side of the opening.
For this reason, the rigidity and the endurance of the ball joint tend to decrease and the grease between the ball section and the anti-friction seat can easily flow out through the opening of the seat.

### DISCLOSURE OF THE INVENTION

A primary object of the present invention is to provide a ball joint which is substantially free from high rotational friction torque of the ball section and is enhanced in rigidity and endurance by means of the improvement of the configuration of anti-friction seat.

The present invention provides a ball joint provided with a ball stud having a ball section at one end thereof, a socket for housing the ball section, and an elastically deformable anti-friction seat mounted between the ball section and the socket and rotatably supporting the ball section, the socket and the anti-friction seat having openings through which the stud section of the ball stud is inserted in a loose fit condition, wherein bases and grooves are arranged in the inner surface of the anti-friction seat so as to extend in a direction across the peripheral edge of the opening and be alternately arranged in the circumferential direction extending along the peripheral edge of the opening; each of the grooves is isolated from the opening by a partition wall extending between bases on opposite sides of the groove; the bases are in spherical contact with the ball section; and the grooves are filled with a lubricating agent.

According to the above-described configuration, bases and grooves are arranged in the inner surface of the anti-friction seat, and each of the bases and each of the grooves extend in a direction across the peripheral edge of the opening and are alternately arranged in the circumferential direction extending along the peripheral edge of the opening. Each of the grooves is isolated from the opening by a partition wall extending between bases on opposite sides of the groove. Accordingly, even when the surface of the ball section is moved across the grooves and the bases relative thereto, thereby the bases are moved relative to the ball section under the condition where the bases are depressed against the surface of the ball section, the grease in the grooves can effectively be restrained from flowing through the opening out of the ball joint by the partition walls. Therefore, the grease in the grooves can more easily stay in the grooves and can more easily enter the spaces between the bases and the ball section as compared with the case where the partition walls are not provided.

In addition, the bases are in spherical contact with the ball section. Therefore, as compared with the case where the ball section is in line contact with the anti-friction seat, the surface pressure of the anti-friction seat can more reliably be restrained from going up locally when a load is subjected which moves the ball section toward the opening relative to the socket.

Further, each of the partition walls is provided at such a position that it isolates each of the grooves from the opening. Therefore, as compared with the case where the partition walls are not provided or the partition walls are provided at the other positions, it is possible to reduce the deformation of the anti-friction seat at the end on the side of the opening when a load is subjected which tends to move the ball section toward the opening relative to the socket. Accordingly, the configuration as well restrains the grease in the grooves from flowing through the opening out of the ball joint.

The above-mentioned configuration may be such that each of the partition walls is in contact with the ball section.

According to this configuration, each of the partition walls is in contact with the ball section, which enables to restrain more reliably the grease in the grooves from flowing through the opening out of the ball joint as compared with the case where each of the partition walls is not in contact with the ball section.

The above-mentioned configuration may be such that: the surface of each of the partition walls which is in contact with the ball section has a constant width over the major part between the opposite ends thereof.

According to this configuration, surface pressure between the ball section and the surface of each partition wall can be rendered constant over the major part of each partition wall, which enhances endurance of the partition walls as compared with the case where the width of the surface of each partition wall which is in contact with the ball section is not constant over the major part of each partition wall.

The above-mentioned configuration may be such that: the surface of each of the partition walls has a width which is not smaller than the depth of the grooves and is not larger than the twice of the depth.

When the surface of each partition wall is smaller in width than the depth of the groove, it is difficult to prevent reliably the grease in the grooves from flowing through the opening out of the ball joint. By contrast, when the surface of each partition wall is larger in width than the twice of the depth of the groove, the elastic deformation amount of each partition wall becomes small when it is subjected to compression stress by the ball section, which increases the surface pressure between the surface of each partition wall and the ball section, resulting in the grease being hard to enter into the space therebetween.

According to the above configuration, the surface of each of the partition walls has a width which is not smaller than the depth of the groove and is not larger than the twice of the depth. Therefore, while preventing grease from being hard to enter the space between the surface of each partition wall and the ball section due to high surface pressure therebetween, the grease in the grooves can reliably be restrained from flowing through the opening out of the ball joint.

The above-mentioned configuration may be such that: each of the partition walls is formed with a cutout which allows the lubricating agent to flow between the associated groove and the opening at least under the situation where the ball section is located at a standard position relative to the socket and the anti-friction seat.

According to this configuration, the lubricating agent can flow between the grooves and the opening at least under the situation where the ball section is located at a standard position relative to the socket and the anti-friction seat, which enables for the grease in each groove to flow more appropriately out of each groove and for fresh grease to be supplied into each groove more appropriately as compared with the case where grease is not allowed to flow between the grooves and the opening.

The above-mentioned configuration may be such that: each of the cutouts is formed at a position spaced apart from the associated bases.

According to this configuration, the grease in the area close to the bases in each groove must move over a longer distance to flow through the opening out of the ball joint as compared with the case where each cutout is formed at a position adjacent to each base. Therefore, even when the ball section and the anti-friction seat are moved across the bases and the grooves relative thereto, thereby the bases are moved relative to the ball section under the condition where the bases are depressed against the surface of the ball section, the grease in the grooves can reliably be restrained from flowing through the opening out of the ball joint.

The above-mentioned configuration may be such that: the anti-friction seat has an extension section between the partition walls and the opening, and the extension section is free from being contact with the ball section at least under the situation where the ball section is located at a standard position relative to the socket and the anti-friction seat.

According to this configuration, the strength and the endurance of the anti-friction seat can be enhanced as compared with the case where the extension section is not provided between the partition walls and the opening. In addition, the extension section is free from being contact with the ball section at least under the situation where the ball section is located at a standard position relative to the socket and the anti-friction seat, which enables to prevent excessive deformation of the anti-friction seat at the end on the side of the opening when a load is subjected which tens to move the ball section toward the opening relative to the socket.

The above-mentioned configuration may be such that: the extension section extends circularly in the circumferential direction extending along the peripheral edge of the opening.

According to this configuration, as compared with the case where the extension section extends intermittently in the circumferential direction extending along the peripheral edge of the opening, the strength of the anti-friction seat at the end on the side of the opening can be increased, whereby the strength and the endurance of the anti-friction seat can be enhanced.

The above-mentioned configuration may be such that: the extension section defines the opening.

According to this configuration, the extension section defines the opening, which enables to prevent the opening of the anti-friction seat from deforming excessively when a load is subjected which tends to move the ball section toward the openings relative to the socket.

The above-mentioned configuration may be such that: the socket and the anti-friction seat have a common axis, and the bases and the grooves extend along hypothetical planes passing through the common axis.

The above-mentioned configuration may be such that: the bases and the grooves are evenly spaced apart about the common axis.

The above-mentioned configuration may be such that: viewing at a same position along the common axis, the width of the grooves is not larger than that of the bases.

The above-mentioned configuration may be such that: each of the partition walls extends between the bases on opposite sides of the associated groove at the ends on the side of the opening.

The above-mentioned configuration may be such that: the cut-outs are formed in the surface of the partition walls which are in contact with the ball section.

### BRIEF DESCRIPTION OF THE DRAWINGS

FIG. 1 is a vertical cross-sectional view showing a cross-section of an embodiment of a ball joint of the present invention along a cutting surface through an axis of a socket.
FIG. 2 is a plan view showing the anti- friction seat shown in FIG. 1.

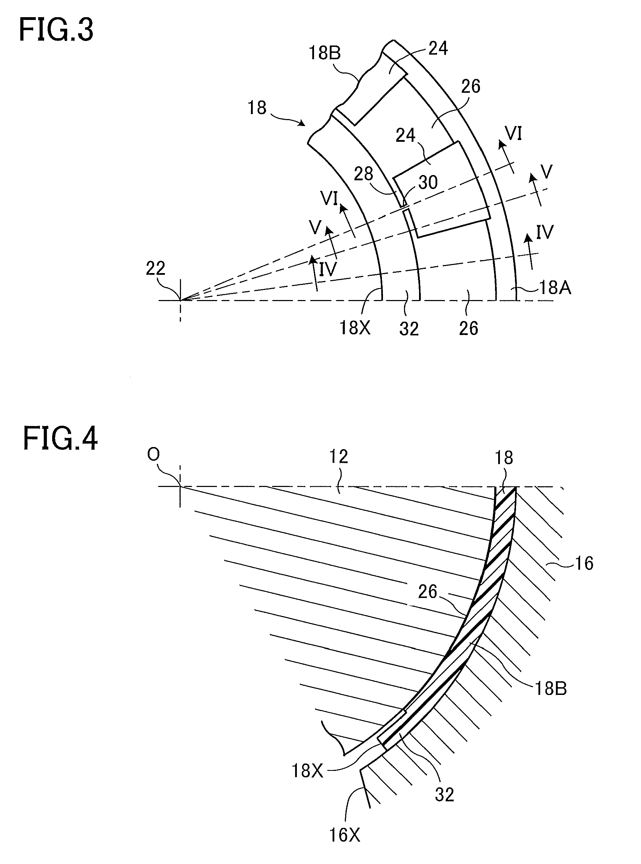

FIG. 3 is an enlarged partial plan view showing a portion of the anti-friction seat.
FIG. 4 is an enlarged partial sectional view along the line IV-IV shown in FIG. 3.

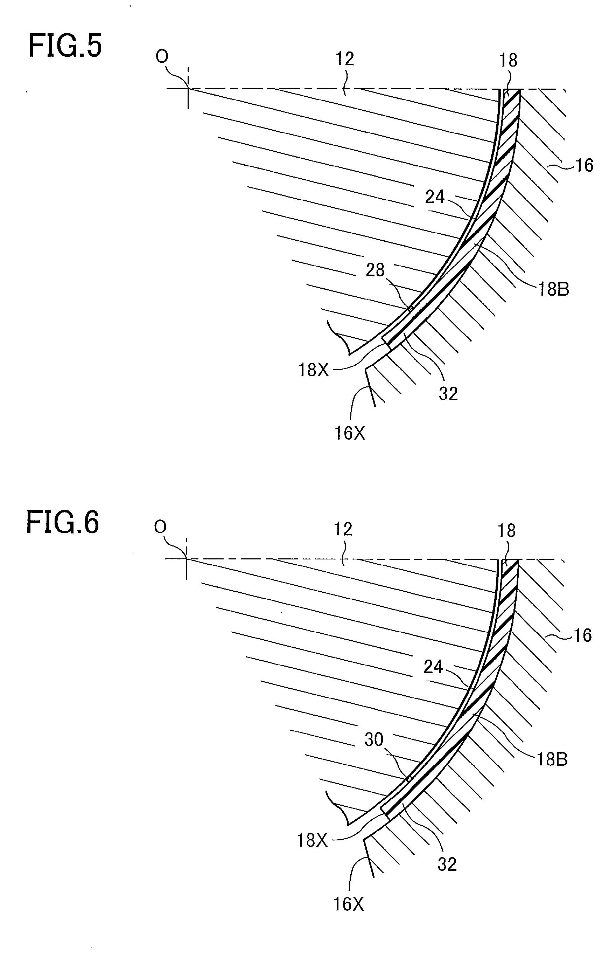

FIG. 5 is an enlarged partial sectional view along the line V-V shown in FIG. 3.
FIG. 6 is an enlarged partial sectional view along the line VI-VI shown in FIG. 3.

### BEST MODE FOR CARRYING OUT THE INVENTION

The present invention will now be described in detail with respect to a preferred embodiment by referring to the accompanying drawings.

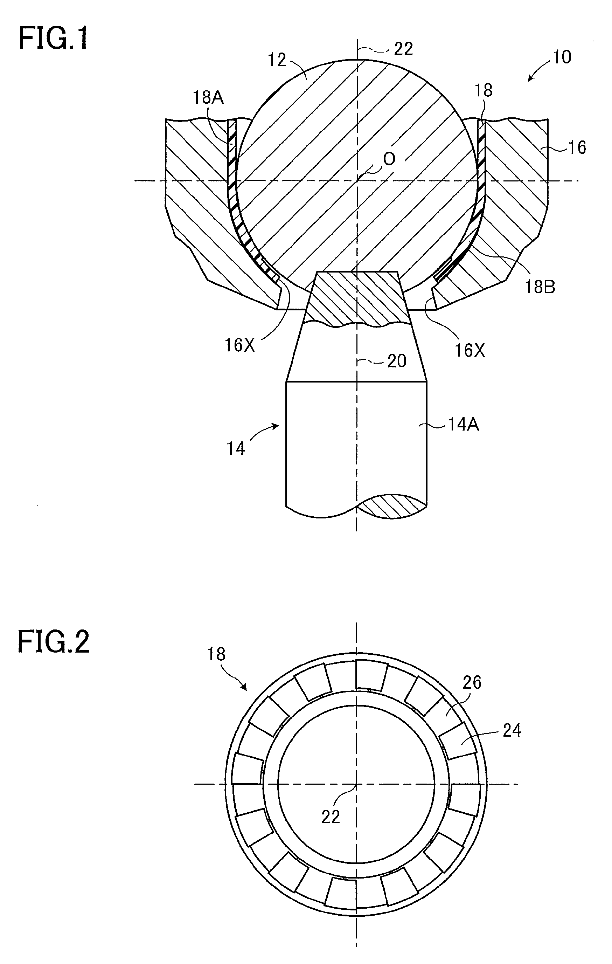

FIG. 1 is a vertical cross-sectional view showing a cross-section of an embodiment of a ball joint of the present invention along a cutting surface through an axis of a socket.

In FIG. 1, reference numeral 10 denotes an entire ball joint. The ball joint 10 comprises a ball stud 14 having a ball section 12 at one end thereof, a cylindrical socket 16 for rotatably housing the ball section 12, and an elastically deformable cylindrical anti-friction seat 18 mounted in compression between the ball section 12 and the socket 16. The anti-friction seat 18 is fitted in the socket 16 and the outer surface of the anti-friction seat 18 is in close contact with the inner surface of the socket 16. The ball stud 14 and the socket 16 may be formed from any of various kinds of metal known in the art and the anti-friction seat 18 may be formed from any resin which is preferably superior in wear resistance and resistance to pressure.

The ball stud 14 has an axis 20, on which the ball section 12 has the center O. The socket 16 and the anti-friction seat 18 have a common axis 22. The center O of the ball section 12 is located on the axis 22 under the situation where the ball section 12 is located at a standard position relative to the socket 16 and the anti-friction seat 18. In other words, the center O of the ball section 12 is an intersection point of the axes 20 and 22 under the situation where the axes intersect with each other. The ball section 12 is rotatably supported by the socket 16 by way of the anti-friction seat 18 so that the ball stud 14 can pivot about the center O relative to the socket 16.

The socket 16 and the anti-friction seat 18 have openings 16X and 18X, respectively, at one end thereof. The stud portion 14A of the ball stud 14 is inserted in a loose fit condition through the socket 16 and the anti-friction seat 18 and extends through the openings 16X and 18X to outside of the socket 16 and the anti-friction seat 18. The peripheral edges of the openings 16X and 18X have circular shapes each having a center on the axis 22 and extend in planes perpendicular to the axis 22. The peripheral edge of the opening 18X is on the side of the center O of the ball section 12 relative to the peripheral edge of the opening 16X and has a larger diameter than the peripheral edge of the opening 16X.

Although not shown in the figures, a cap is fixed to the other end of the socket 16, which is the end opposite to the opening 16X along the axis 22. The cap covers the other end of the socket 16 and an anti-friction member separate of the anti-friction seat 18 is mounted between the cap and the ball section 12. It is to be noted that the configuration of the ball joint 10 at the other end of the socket 16 does not constitute a part of the present invention and, accordingly, may be any of configurations known in the art. Although not shown in the figures, a grease sump is formed between the cap and the ball section 12 in the socket 16 in which grease serving as a lubricating agent is encapsulated.

The anti-friction seat 18 has a cylindrical section 18A extending along the axis 22 and a spherical shell section 18B integral with one end of the cylindrical section 18A. As shown in FIG. 2, a plurality of grooves 24 are formed in the inner surface of the anti-friction seat 18. Each groove 24 is communicated with the grease sump and is supplied with grease from the grease sump. Each groove 24 extends along a plurality of hypothetical planes passing through the axis 22 and is evenly spaced apart from each other in the circumferential direction about the axis 22. Further, each groove 24 has a cross-sectional shape of U or box opening toward the axis 22, i.e. radially inwardly and has substantially the same size with each other.

It is to be noted that although each groove 24 may extend over the entire length of the anti-friction seat 18, in the embodiment shown, it is provided with a constant cross sectional shape and size at the spherical shell section 18B and an area of the cylindrical section 18A which is adjacent to the spherical shell section 18B. In the embodiment shown, although the spherical shell section 18B of the anti-friction seat 18 gradually slightly increases in thickness as the distance from the cylindrical section 18A increases, the thickness of the spherical shell section 18B may be constant over the entire length.

The grooves 24 define therebetween bases 26 which have spherical inner surfaces. Under the situation where the ball section 12 is located at the standard position relative to the socket 16 and the anti-friction seat 18, that is, under the situation where the center O of the ball section 12 is located at the center of the socket 16 and the spherical shell section 18B, the inner surfaces of the bases 26 are in spherical contact with the ball section 12.

Each groove 24 is isolated from the opening 18X by a partition wall 28 extending between bases 26 on opposite sides of the groove. Each partition wall 28 extends between the ends of the adjacent two bases 26 on the side of the opening 18X and thereby defines the end of the groove 24 on the side of the opening 18X. Each partition wall 28 has a constant width over the major part between the opposite ends and in contact with the ball section 12 at the inner surface. The contact is preferably spherical as is the case with the bases 26.

When the surface of each partition wall 28 is smaller in width than the depth of the groove 24, it is difficult to prevent reliably the grease in the grooves from flowing through the opening out of the ball joint 10. By contrast, when the surface of each partition wall 28 is larger in width than the twice of the depth of the groove 24, the elastic deformation amount of each partition wall 28 becomes small when it is subjected to compression stress by the ball section 12, which increases the surface pressure between the surface of each partition wall and the ball section, resulting in the grease being hard to enter into the space therebetween. Accordingly, preferably, the inner surface of each partition wall 28 is not smaller in width than the depth of the groove 24 and is not larger in width than the twice of the depth of the groove 24.

Each partition wall 28 is formed with a cutout 30 in the inner surface and each cutout 30 connects the associated groove 24 and the space on the side of the opening 18X. Each cutout 30 is located at the center of the partition wall 28 and whereby it is at the position evenly spaced in distance from the opposite bases 26. In the embodiment shown, each cutout 30 has a width which is not larger than the width of the partition walls 28 and has a depth which is the same as the height of the partition walls 28, i.e. the depth of the grooves 24.

An extension section 32 is provided between the partition walls 28 and the opening 18X, and extends circularly about the axis 22. The extension section 32 has a thickness which is substantially the same as that of the sections where the grooves 24 and the cutouts 30 are formed. Accordingly, the extension section 32 is free from being contact with the ball section 12 even if the ball section 12 is subjected to a stress acting relative to the socket 16.

According to the embodiment having the configurations as mentioned above, each groove 24 is isolated from the opening 18X by the respective partition wall 28 extending between bases 26 on opposite sides of the groove, which enables grease to stay more reliably in each groove 24 as compared with the case where each groove 24 is not isolated from the opening 18X by the partition wall 28.

Even when the surface of the ball section 12 is moved across the grooves 24 and the bases 26 relative thereto, and whereby the bases 26 are relatively moved under the condition where the bases 26 are depressed against the surface of the ball section 12, the grease in the grooves 24 can reliably be restrained from flowing through the opening 18X out of the ball joint 10. Therefore, the grease in the grooves 24 can enter the space between the bases 26 and the ball section 12 more easily as compared with the case where the partition walls 28 are not provided, which enables appropriately to lubricate the ball section 12 and the anti-friction seat 18 for a long term and, thereby, to restrain rotational friction torque of the ball section 12 from going up.

The bases 26 are in spherical contact with the ball section 12 and the partition walls 28 are also in contact with the ball section 12. Therefore, as compared with the case where the ball section 12 is in line contact with the anti-friction seat 18, the surface pressure of the anti-friction seat 18 can more reliably be restrained from going up locally when a load is subjected which tends to move the ball section 12 toward the openings 16X and 18X relative to the socket 16.

Each partition wall 28 is provided at a position where it defines the end of the groove 24 on the side of the opening 18X and is in contact with the ball section 12. Therefore, as compared with the case where the partition walls 28 are not provided, it is possible to reduce the deformation of the anti-friction seat 18 at the end on the side of the opening when a load is subjected which tends to move the ball section 12 toward the openings 16X and 18X relative to the socket 16. Accordingly, the configuration as well restrains the grease in the grooves 24 from flowing through the opening 18X out of the ball joint 10.

The surface of each partition wall 28 which is in contact with the ball section 12 has a constant width over the major part between the opposite ends of the partition wall. Therefore, surface pressure between the ball section 12 and the surface of each partition wall 28 can be rendered constant over the major part of each partition wall 28, which enhances endurance of the partition walls as compared with the case where the width of the surface of each partition wall 28 which is in contact with the ball section 12 is not constant.

The surface of each partition wall 28 is not smaller in width than the depth of the grooves 24 and is not larger in width than the twice of the depth of the grooves 24. Therefore, while preventing grease from being hard to enter the space between the surface of each partition wall 28 and the ball section 12 due to high surface pressure therebetween, the grease in the grooves can reliably be restrained from flowing through the openings 16X and 18X out of the ball joint 10.

Each partition wall 28 is formed with a cutout 30 in the inner surface and each cutout 30 connects the associated groove 24 and the space on the side of the opening 18X. Therefore, grease can flow between the grooves 24 and the space on the side of the opening 18X through cutouts 30, which enables for the grease in each groove to flow more appropriately out of each groove and for fresh grease to be supplied into each groove more appropriately as compared with the case where grease is not allowed to flow between the grooves 24 and the space on the side of the opening 18X.

In particular, each cutout 30 is located at the center of the partition wall 28 and, thus, it is at the position evenly spaced in distance from the opposite bases 26. Accordingly, the grease in the area close to the bases 26 in each groove 24 must move over a longer distance to flow toward the opening 18X through each cutout 30 as compared with the case where each cutout 30 is formed at a position adjacent to each base 26. Therefore, even when the ball section 12 and the anti-friction seat 18 are moved in the direction across the bases 26 and the grooves 24 relative to each other, and whereby the bases are moved relative to the ball section under the condition where the bases are depressed against the surface of the ball section, the grease in the grooves can reliably be restrained from flowing through the openings out of the ball joint.

The extension section 32 is provided between the partition walls 28 and the opening 18X. Therefore, the strength and the endurance of the anti-friction seat 18 can be enhanced as compared with the case where the extension section 32 is not provided between the partition walls 28 and the opening 18X. In addition, the extension section 32 is free from being contact with the ball section, which enables to reduce the deformation of the anti-friction seat 18 at the end on the side of the opening when a load is subjected which tends to move the ball section 12 toward the openings relative to the socket 16.

The extension section 32 extends circularly in the circumferential direction extending along the peripheral edge of the opening 18X. Therefore, as compared with the case where the extension section 32 extends intermittently in the circumferential direction extending along the peripheral edge of the opening, the strength of the anti-friction seat 18 at the end on the side of the opening 18X can be increased, whereby the strength and the endurance of the anti-friction seat can be enhanced.

The extension section 32 defines the opening 18X, which enables to prevent the opening of the anti-friction seat from deforming excessively when a load is subjected which tends to move the ball section 12 toward the openings relative to the socket 16.

While the present invention has been described with reference to the above embodiment, it will be apparent to those skilled in the art that the present invention is not limited thereto, but may be embodied in various other forms without departing from the scope of the invention.

For example, in the above-described embodiment, twelve each of the grooves 24 and the bases 26 are formed. However, the numbers of the grooves 24 and the bases 26 are not limited to twelve and may be any other numbers. Both of the grooves 24 and the bases 26 range over 15° about the axis 22. However, the grooves 24 and the bases 26 are not limited to 15° in angular range and may range over angles different to each other. In that case, the angular range of the grooves 24 is preferably not larger than that of the bases 26. For example, the grooves 24 may range over 10° and the bases 26 may range over 20°.

In the above-described embodiment, the grooves 24 and the bases 26 are formed along the axis 22 and extend perpendicular to the circumferential direction of the opening 18X of the anti-friction seat 18. However, the grooves 24 and the bases 26 may extend inclined to the axis 22 as long as they extend across the circumferential direction of the opening 18X of the anti-friction seat 18.

In the above-described embodiment, each partition wall 28 has a constant width over the major part between the opposite ends. However, the width of the surface of each partition wall 28 may not be constant and may be gradually increased toward the bases 26. The surface of each partition wall 28 is in contact with the ball section 12 over the entire length. However, the surface of each partition wall 28 may not at least partly be in contact with the ball section 12. The width of the surface of each partition wall 28 may be set to a value other than the range which is not smaller than the depth of the grooves 24 and is not larger than the twice of the depth of the grooves 24.

In the above-described embodiment, the cutouts 30 are located at the center of the associated partition walls 28 but they may be omitted or may be formed at a position other than the center of the partition walls 28. Each cutout 30 has a width which is not larger than the width of the partition walls 28 and has a depth which is the same as the height of the partition walls 28, i.e. the depth of the grooves 24. However, the width and the depth of the cutouts 30 are not limited thereto.

Further, in the above-described embodiment, the anti-friction seat 18 has the extension section 32 provided between the partition walls 28 and the opening 18X, and the extension section 32 extends circularly in the circumferential direction extending along the peripheral edge of the opening 18X and is free from being contact with the ball section. However, the extension section 32 may be omitted; may intermittently extend in the circumferential direction extending along the peripheral edge of the opening 18X; and may partially be in contact with the ball section.

## Claims

1. A ball joint provided with a ball stud having a ball section at one end thereof, a socket for housing said ball section, and an elastically deformable anti-friction seat mounted between said ball section and said socket and rotatably supporting said ball section, said socket and said anti-friction seat having openings through which the stud section of said ball stud is inserted in a loose fit condition, wherein
bases and grooves are arranged in the inner surface of said anti-friction seat so as to extend in a direction across the peripheral edge of said opening and be alternately arranged in the circumferential direction extending along the peripheral edge of said opening; each of said grooves is isolated from said opening by a partition wall extending between bases on opposite sides of the groove; said bases are in spherical contact with said ball section; and said grooves are filled with a lubricating agent.

2. A ball joint according to claim 1, wherein each of said partition walls is in contact with said ball section.

3. A ball joint according to claim 1 or 2, wherein the surface of each of said partition walls which is in contact with said ball section has a constant width over the major part between the opposite ends thereof.

4. A ball joint according to claim 3, wherein the surface of each of said partition walls has a width which is not smaller than the depth of said grooves and is not larger than the twice of the depth.

5. A ball joint according to any one of claims 1 to 4, wherein each of said partition walls is formed with a cutout which allows the lubricating agent to flow between the associated groove and said opening at least under the situation where said ball section is located at a standard position relative to said socket and said anti-friction seat.

6. A ball joint according to claim 5, wherein each of said cutouts is formed at a position spaced apart from the associated bases.

7. A ball joint according to any one of claims 1 to 6, wherein said anti-friction seat has an extension section between each of said partition walls and said opening, and said extension section is free from being contact with said ball section at least under the situation where said ball section is located at a standard position relative to said socket and said anti-friction seat.

8. A ball joint according to claim 7, wherein said extension section extends circularly in the circumferential direction extending along the peripheral edge of said opening.

9. A ball joint according to claim 8, wherein said extension section defines said opening.
